# EUROPEAN PATENT APPLICATION

(11) **EP 4 324 372 A2**
(43) Date of publication of application: **21.02.2024**
(21) Application number: 23188377.8
(22) Date of filing: 28.07.2023
(51) Int. Cl.: A47L 1/08

(54) **CLEANING TOOL ACCESSORY ATTACHMENT FOR CLEANING TOOLS**

(30) Priority: 29.07.2022 US 202263393358 P
(71) Applicant: Unger Marketing International, LLC, Bridgeport CT 06610 (US)
(72) Inventor: Harrington, William, Bridgeport, 06610 (US)
(74) Representative: Müller Schupfner & Partner Patent- und Rechtsanwaltspartnerschaft mbB

(57) **Abstract**

Cleaning tools and cleaning tool accessory attachments may include an attachment member configured to releasably attached to a portion of a water-fed cleaning assembly, a mounting member releasably connected to the attachment member, and a holding member releasably connected to the mounting member, the holding member configured to releasably retain a cleaning element thereon. A cleaning tool may include an extendable pole assembly and a working head assembly with a cleaning tool accessory attachment attached to at least one of the extendable pole assembly and the working head assembly.

## Description

### CROSS-REFERENCE TO RELATED APPLICATIONS

The present application claims the benefit of and is a nonprovisional application of United States Provisional Application Serial No. 63/393358 filed on July 29, 2022 entitled Cleaning Tool Accessory Attachment for Cleaning Tools, the contents of which is incorporated herein.

### BACKGROUND

The subject matter disclosed herein generally relates to cleaning tools and, more particularly, to cleaning tool accessory attachments for extendable cleaning tools.

For buildings and tall structures, it is often necessary to ensure the outside facade and surfaces remain clean. Such cleaning can ensure an aesthetic standard of the structure. Further, particularly with respect to glass surfaces (e.g., windows, solar panels, etc.), such cleaning can ensure desired thermal and optical performance of the glass (e.g., letting light and/or heat into an interior space, improved solar cell performance, etc.). A dirty glass surface may lead to reduced transmission of light therethrough, potentially increasing lighting costs (e.g., increased electrical costs). Furthermore, a dirty glass surface may also lead to increased heat absorption by the dirty particles adhered to the glass. Such particulates absorbing and retaining heat can leading to an increase in costs associated with air conditioning systems.

Accordingly, devices that enable cleaning of such exterior surfaces, and in particular glass surfaces, are useful. One solution is the use of poles, which may be extendable, to enable a user to reach locations or surfaces that are distant but without requiring extensive movement or tools to reach such locations or surfaces (e.g., harnesses, ladders, cradles, etc.). An extendable cleaning pole may be extended upward from the ground. The pole may be configured to support and/or supply cleaning fluid to a brush or other cleaning implement on an upper end of the pole. Such cleaning systems and/or tools can include telescopically extending poles and/or modular poles and a cleaning head (e.g., brush and/or squeegee) at one end of the pole. Cleaning fluid typically flows through a tube running within or along an exterior of the telescopically extending pole to the cleaning head.

### SUMMARY

According to some embodiments, cleaning tool accessory attachments are provided. The cleaning tool accessory attachments include an attachment member configured to releasably attached to a portion of a water-fed cleaning assembly, a mounting member releasably connected to the attachment member, and a holding member releasably connected to the mounting member, the holding member configured to releasably retain a cleaning element thereon.

In addition to one or more of the features described herein, or as an alternative, further embodiments of the cleaning tool accessory attachments may include that the portion of the water-fed cleaning assembly is one of a working head assembly and a pole element of an extendable pole.

In addition to one or more of the features described herein, or as an alternative, further embodiments of the cleaning tool accessory attachments may include a cleaning element releasably attached to the holding member.

In addition to one or more of the features described herein, or as an alternative, further embodiments of the cleaning tool accessory attachments may include that the cleaning element is a scrub pad.

In addition to one or more of the features described herein, or as an alternative, further embodiments of the cleaning tool accessory attachments may include that a portion of the cleaning element is secured between a portion of the mounting member and a portion of the holding member.

In addition to one or more of the features described herein, or as an alternative, further embodiments of the cleaning tool accessory attachments may include that the holding member has a D-shape geometry.

In addition to one or more of the features described herein, or as an alternative, further embodiments of the cleaning tool accessory attachments may include that holding member has a triangular-shape geometry.

In addition to one or more of the features described herein, or as an alternative, further embodiments of the cleaning tool accessory attachments may include that the holding member comprises at least one retention element on an exterior surface, the at least one retention element configured to engage and secure the cleaning element to the holding member.

In addition to one or more of the features described herein, or as an alternative, further embodiments of the cleaning tool accessory attachments may include a fastener releasably connecting the attachment member to the mounting member.

In addition to one or more of the features described herein, or as an alternative, further embodiments of the cleaning tool accessory attachments may include that fastener is one of a quick release fastener or a compression release fastener.

In addition to one or more of the features described herein, or as an alternative, further embodiments of the cleaning tool accessory attachments may include that wherein the mounting member comprises a mounting plate having at least one mounting aperture, and the holding member includes at least one protrusion on a base of the holding member, the at least one protrusion configured to be received in the at least one mounting aperture.

In addition to one or more of the features described herein, or as an alternative, further embodiments of the cleaning tool accessory attachments may include that, when the at least one protrusion is received in the at least one mounting aperture, relative rotation between the mounting member and the holding member is prevented.

In addition to one or more of the features described herein, or as an alternative, further embodiments of the cleaning tool accessory attachments may include that the mounting member comprises a first connector configured to releasably connect with the attachment member and a second connector configured to releasably connect with the holding member.

In addition to one or more of the features described herein, or as an alternative, further embodiments of the cleaning tool accessory attachments may include that the holding member comprises a threaded post on a base of the holding member, wherein the threaded post is configured to be received by and threadedly engage with the second connector of the mounting member.

In addition to one or more of the features described herein, or as an alternative, further embodiments of the cleaning tool accessory attachments may include that the first connector of the mounting member is configured to be received between two portions of the attachment member and secured thereto by a compressive force.

In addition to one or more of the features described herein, or as an alternative, further embodiments of the cleaning tool accessory attachments may include that the first connector of the mounting member comprises a plurality of teeth and each of the two portions of the attachment member comprises a plurality of teeth, and when the first connector is received and compressed between the two portions, relative rotation between the mounting member and the attachment member is prevented.

In addition to one or more of the features described herein, or as an alternative, further embodiments of the cleaning tool accessory attachments may include that the holding member comprises a hollow interior with a rib along an interior surface of the holding member, the rib configured to provide structural support to the holding member.

According to some embodiments, cleaning tools are provided. The cleaning tools include an extendable pole assembly, a working head assembly attached at one end of the extendable pole assembly, and a cleaning tool accessory attachment attached to one of the extendable pole assembly or the working head assembly. The cleaning tool accessory attachment includes an attachment member configured to releasably attach to the respective extendable pole assembly or the working head assembly, a mounting member releasably connected to the attachment member, and a holding member releasably connected to the mounting member, the holding member configured to releasably retain a cleaning element thereon.

In addition to one or more of the features described herein, or as an alternative, further embodiments of the cleaning tools may include a first cleaning element attached to the working head assembly and a second cleaning element attached to the holding member.

In addition to one or more of the features described herein, or as an alternative, further embodiments of the cleaning tools may include that the extendable pole assembly and working head assembly form a water-fed cleaning assembly.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic illustration of an extendable cleaning tool in accordance with an embodiment of the present disclosure;
FIG. 1B is an alternative view of the extendable cleaning tool of FIG. 1A;
FIG. 1C is an unassembled view of a portion of the extendable cleaning tool of FIG. 1A;
FIG. 2A is a schematic illustration of a pole extension adapter in accordance with an embodiment of the present disclosure;
FIG. 2B is a schematic illustration of the pole extension adapter of FIG. 2A having a fluid conduit arranged therein;
FIG. 2C is a schematic illustration of the pole extension adapter of FIG. 2A as arranged between two pole elements;
FIG. 3A is a schematic illustration of a portion of a pole element in accordance with an embodiment of the present disclosure;
FIG. 3B is an end-on illustration of the pole element of FIG. 3A;
FIG. 4A illustrates a working head assembly in accordance with an embodiment of the present disclosure, in a first configuration;
FIG. 4B illustrates the working head assembly of FIG. 4A in a second configuration having an extension element;
FIG. 4C illustrates the working head assembly of FIG. 4A in a third configuration having two extension elements;
FIG. 5A is a schematic perspective illustration of a cleaning tool accessory attachment in accordance with an embodiment of the present disclosure;
FIG. 5B is a side view of the cleaning tool accessory attachment of FIG. 5A;
FIG. 5C is an alternative perspective view of the cleaning tool accessory attachment of FIG. 5A;
FIG. 5D is an unassembled view of the cleaning tool accessory attachment of FIG. 5A;
FIG. 6A is a schematic illustration of a mounting member of a cleaning tool accessory attachment in accordance with an embodiment of the present disclosure;
FIG. 6B is a plan view of the mounting member of FIG. 6A;
FIG. 7 is a schematic illustration of a cleaning tool accessory attachment in accordance with another embodiment of the present disclosure;
FIG. 8A is a schematic illustration of a cleaning tool accessory attachment in accordance with another embodiment of the present disclosure;
FIG. 8B is an unassembled view of the cleaning tool accessory attachment of FIG. 8A;
FIG. 9 is a schematic illustration of a cleaning tool accessory attachment in accordance with another embodiment of the present disclosure;
FIG. 10A is a schematic illustration of a cleaning tool accessory attachment in accordance with another embodiment of the present disclosure;
FIG. 10B is an unassembled view of the cleaning tool accessory attachment of FIG. 10A;
FIG. 11A is a schematic illustration of a cleaning tool accessory attachment in accordance with another embodiment of the present disclosure; and
FIG. 11B is an unassembled view of the cleaning tool accessory attachment of FIG. 11A.

### DETAILED DESCRIPTION

As shown and described herein, various features of the disclosure will be presented. Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

As discussed above, cleaning tools may include extendable elements or poles configured to enable a user to reach locations or surfaces that are distant without requiring extensive movement or tools to reach such locations or surfaces. The cleaning pole may be configured to support and/or supply cleaning fluid to a brush or other cleaning implement on an upper end of the pole or directly to an adjacent surface (e.g., glass surface, such as windows, solar panels, glass ceiling/roof sections, etc.). In some configurations, a hose may be supported along an exterior of the pole from a fluid source to a working head (e.g., brush or squeegee). In other configurations, a hose may be configured to pass through an interior channel or bore of the pole and connect to the working head. Further, in other configurations, the pole itself may define an interior channel or passage for fluid to be conveyed to the working head. Any of such cleaning poles can include a telescopically extending pole structure and/or a modular extending pole structure with different segments and/or pole elements removably connected to each other.

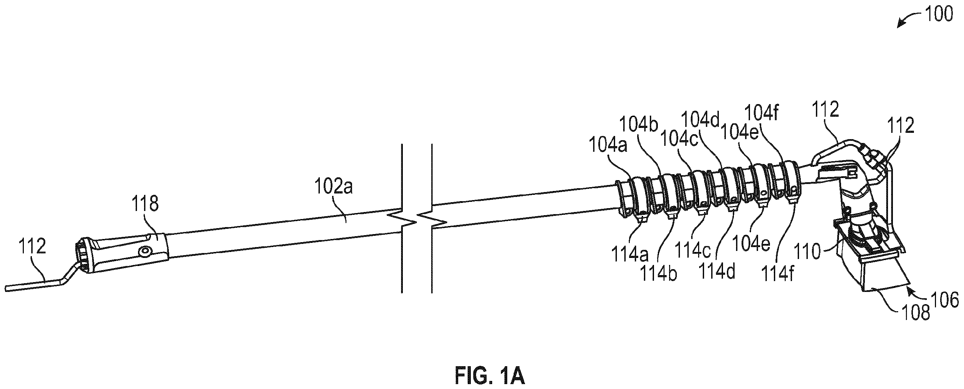

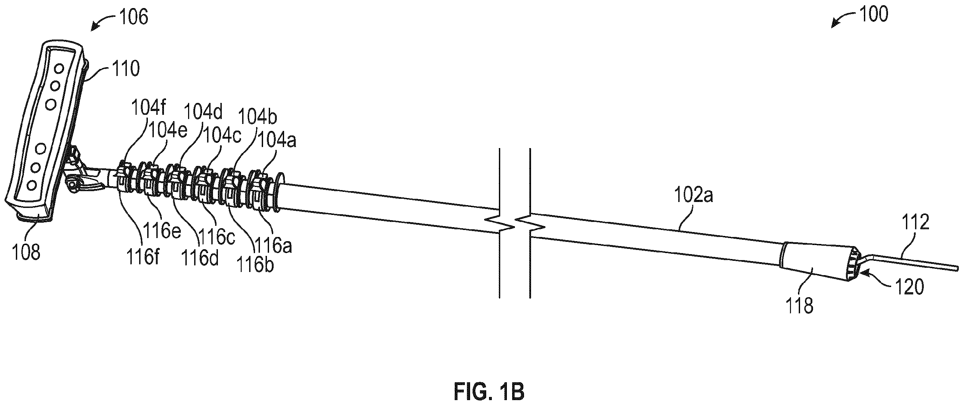

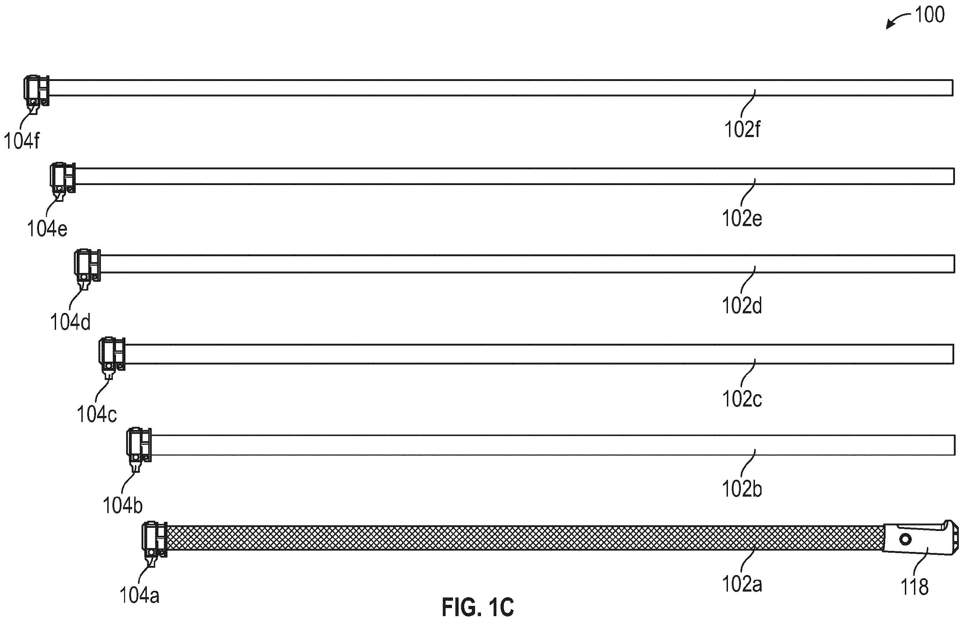

Referring to FIGS. 1A-1C, schematic illustrations of an extendable cleaning tool 100 in accordance with an embodiment of the present disclosure are shown. FIG. 1A is a side schematic illustration of the extendable cleaning tool 100, FIG. 1B is a bottom schematic illustration of the extendable cleaning tool 100, and FIG. 1C is an unassembled illustration showing portions of the extendable cleaning tool 100. The extendable cleaning tool 100, as shown, is a telescoping pole configuration that incorporates nested pole elements that are selectively engageable with each other to allow for customizable tool lengths and/or extension. In other configurations, rather than telescoping, the pole elements may be joinable or connectable by various engagement mechanisms, as will be appreciated by those of skill in the art.

As shown in FIGS. 1A-1C, the extendable cleaning tool 100 includes pole elements 102a-102f which are nested within each other to form an extendable and telescoping pole configuration. Each pole element 102a-102f includes a respective clamp 104a-104f on an end thereof. The clamps 104a-104f are configured to provided selective fixed engagement between an outer pole element and an inner pole element of the pole elements 102a-102f, which allows for the telescoping nature of the extendable cleaning tool 100, with the claims 104a-104f configured to securely connect the pole elements at a desired extended length. At one end of the extendable cleaning tool 100, and attached to an innermost pole element 102f, is a working head assembly 106. As used herein, the "innermost" pole is disposed substantially radially inward from, or disposed within, the next adjacent pole when the extendable cleaning tool is in a collapsed state (e.g., pole element 102e). The working head assembly 106 may selectively engage and be attached to the innermost pole element 102f by an associated clamp 104f of the innermost pole element 102f.

The working head assembly 106, as shown, has a brush configuration, including a brush 108, a head mount 110, and one or more fluid conduits 112. The brush 108 may incorporate one or more types or sets of bristles configured to enable scrubbing of a surface, such as a glass surface or wall. In other embodiments, the brush 108 may be replaced with a sponge, squeegee, mop head, or other cleaning implement as will be appreciated by those of skill in the art. In some embodiments, the working head assembly 106 can include multiple different cleaning implements, some of which are described herein, including, without limitation scrub elements, different brush heads, sponges, squeegees, mop heads, or the like. That is, a multiple-cleaning implement arrangement may be employed at the working head assembly 106 in accordance with some embodiments of the present disclosure.

In this illustrative, non-limiting embodiment, the pole elements 102a-102f are hollow. The hollow interior of each pole element 102a-102f enables the nesting of the pole elements 102a-102f and also enables, in some embodiments, the fluid conduit 112, or other hose or similar structure, to be passed therethrough and fluidly connect to the fluid conduit 112 of the working head assembly 106. Such fluid conduit 112 can connect the working head assembly 106 to a fluid supply source, such as a faucet, filtered water device, or other fluid supply as will be appreciated by those of skill in the art. In some embodiments, the fluid conduit 112 can be used for a water-fed working head assembly 106, which provides liquids (e.g., water or a cleaning solution) directly into or at the brush 108 or other attached cleaning implement. In some embodiments, the hollow interior of the pole elements 102a-102f may define a fluid conduit that does not require a separate hose passed therethrough. Further, in some embodiments, a hose or other conduit structure may be supported along an exterior of the extendable cleaning tool 100 by optional guides 114a-114f, which are part of or connected to the respective clamps 104a-104f.

As shown in FIG. 1B, each clamp 104a-104f includes a manual actuator element 116a-116f. The manual actuator elements 116a-116f enable a user to loosen or tighten an engagement between one pole element 102a-102f and another pole element 102a-102f, to allow two of the pole elements 102a-102f to translate, slide, or otherwise move in an axial direction relative to each other in order to increase or decrease a total length of the extendable cleaning tool 100. The clamps 104a-104f are configured to provide pressure or friction engagement between one pole element 102a-102f and another pole element 102a-102f. The clamps 104a-104f, in isolation, may define internal apertures through which an associated pole element 102a-102f may be installed and attached. In some embodiments, the clamps 104a-104f may include at least one element that is actuated by the manual actuator elements 116a-116f to pass through a respective pole element 102a-102f to engage with another pole element 102a-102f that is interior to the respective pole element 102a-102f.

An outermost pole element 102a includes a base 118. The base 118 of the outermost pole element 102a may be arranged as a handle for manual gripping and holding of the extendable cleaning tool 100. The base 118 may also include, as shown in FIG. 1B, an opening 120. The opening 120 may be configured to receive a hose, tube, or other fluid conduit structure (e.g., fluid conduit 112), and guide such hose, tube, or other fluid conduit structure into and through an interior hollow of the pole elements 102a-102f of the extendable cleaning tool 100 to the working head assembly 106. The base 118 of the pole element 102a may also be configured to receive a pole extension assembly in order to enable additional extension of the extendable cleaning tool 100 beyond the length provided by the extendable pole elements 102a-102f. Such pole extension assembly may be employed to add additional pole elements to the extendable cleaning tool 100. In some embodiments, the opening 120 of the outermost pole element 102a may be configured to engage with and/or receive a pole extension adapter to enable further extension and increased length of the extendable cleaning tool 100, such as shown and described herein.

FIG. 1C illustrates a portion of the extendable cleaning tool 100 in unassembled form (the working head assembly 106 is omitted for clarity). FIG. 1C illustrates six pole elements 102a-102f that define or form an extendable pole device. A first pole element 102a defines an outermost pole element, with each of the remaining pole elements 102b-102f configured to fit within and be nested within the first pole element 102a (i.e., disposed substantially within). The first pole element 102a includes the first clamp 104a on an end thereof. The first clamp 104a is fixedly attached to the first pole element 102a and is configured to actuate and selectively attach to or engage with an outer surface of a second pole element 102a which fits within a hollow structure of the first pole element 102a.

Similarly, the second pole element 102b includes the second clamp 104b on an end thereof. The second clamp 104b is fixedly attached to the second pole element 102b and is configured to actuate and selectively attach to or engage with an outer surface of a third pole element 102c which fits within a hollow structure of the second pole element 102b. This arrangement continues for a fourth pole element 102d within the third pole element 102c, a fifth pole element 102e within the fourth pole element 102d, and a sixth pole element 102f within the fifth pole element 102e. The respective clamps 104c-104e provide for the selective engagement with the interior positioned pole elements 102d-104f. The sixth pole element 102f includes a respective sixth clamp 104f that is configured to engage with a neck or similar structure of the working head assembly 106. Although shown and described in FIGS. 1A-1C with the extendable cleaning tool 100 having six pole elements 102a-102f, those of skill in the art will appreciate that an extendable cleaning tool in accordance with the present disclosure can include any number of pole elements, and the present illustrated embodiment is merely provided for explanatory and illustrative purposes and is not intended to be limiting.

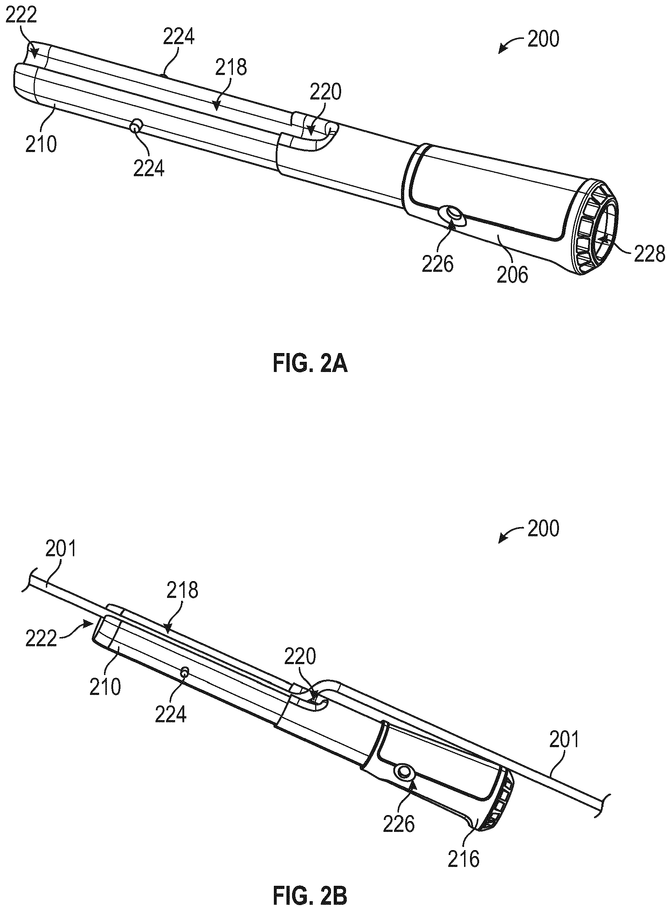

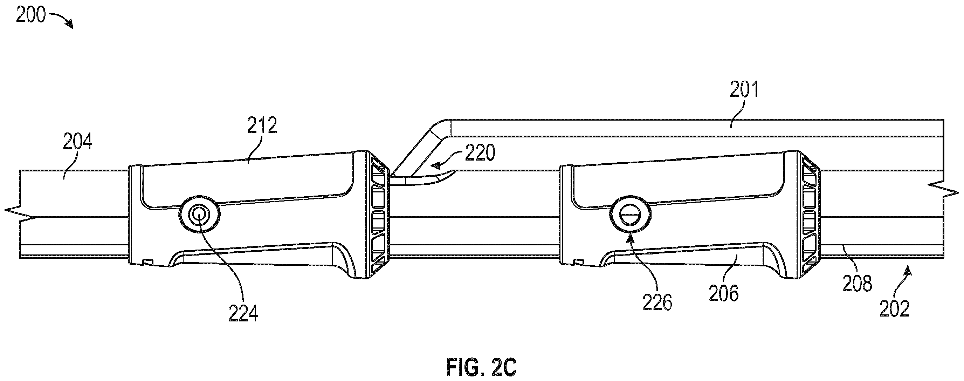

Turning now to FIGS. 2A-2C, schematic illustrations of a pole extension adapter 200 in accordance with an embodiment of the present disclosure are shown. FIG. 2A illustrates the pole extension adapter 200 in isolation, FIG. 2B illustrates the pole extension adapter 200 with a fluid conduit 201 arranged therein, and FIG. 2C illustrates the pole extension adapter 200 as connecting a pole extension structure 202 to a pole element 204. The pole element 204 may be similar to the first or outermost pole described with respect to FIGS. 1A-1C. The pole extension adapter 200 may be used with other embodiments disclosed herein or with other extendable pole systems.

The pole extension adapter 200 is configured to connect two poles or the pole extension structure 202 to a pole element 204 of an extendable cleaning tool, such as shown and described with respect to FIGS. 1A-1C. The pole extension adapter 200 includes a first end 206 configured to engage with a first extension pole 208 of a pole extension structure 202 and a second end 210 configured to engage with a base 212 of the pole element 204. The first extension pole 208 is part of the pole extension structure 202. The pole extension structure 202 can include one or more extension poles which may be selectively connectable by one or more respective clamps, similar to the nested pole elements described in FIGS. 1A-1C.

The second end 210 of the pole extension adapter 200 is configured to be inserted into the pole element 204 and defines a channel 218 having a channel inlet 220 and a channel outlet 222. The channel inlet 220 includes, as shown, a curved or smooth surface that directs the channel inlet 220 in a radially outward direction relative to an axis passing through the pole extension adapter 200. The channel inlet 220 may be arranged to be normal or radially facing relative to an axis passing through the pole extension adapter 200. The channel outlet 222 is open in a direction parallel with the axis of the pole extension adapter 200. As a result, when installed to the base 212 of the pole element 204, the pole extension adapter 200 defines an aperture through which a hose or other fluid conduit 201 may enter an interior hollow space of the pole element 204 (e.g., as shown in FIG. 2C). The pole extension adapter 200 can include one or more locking pins 224 that can pass through or into receiving apertures or recesses in the base 212 of the pole element 204 and thus lock or secure the pole extension adapter 200 to the base 212.

At the first end 206, the pole extension adapter 200 can include one or more pin apertures 226. The pin apertures 226 may be configured to receive a detent pin or other type of locking pin of the first extension pole 208. In this illustrative embodiment, the first extension pole 208 slides into and within the first end 206 of the pole extension adapter 200, which may be received through an opening 228 of the first end 206, as shown in FIG. 2A.

In operation, the fluid conduit 201 can be arranged within the pole element 204 and be fluidly connected to a working head (not shown). The working head can be configured to receive fluid flow (e.g., water, cleaning fluid, etc.) through the fluid conduit 201 or similar structure (e.g., a hose). The fluid conduit 201 can pass from an interior hollow of the pole element 204 through the channel 218 of the pole extension adapter 200 to an exterior environment (e.g., at the channel inlet 220). Advantageously, this configuration provides for an opening or passage for a hose to enter the interior hollow of the pole element 204. Because the channel inlet 220 is formed and defined by the pole extension adapter 200 there is no need for a specialized hose that is either permanently installed within the hollow pole element or that connects to an external adapter or threaded connection on the exterior of the pole structures. The pole extension adapter 200 provides for a structure to pass a hose or similar structure from an exterior area to within an internal channel or passage of a pole element. As such, embodiments of the present disclosure enable a user to employ any desired hose structure and is not specifically limited to unique or specialized or pre-installed hoses.

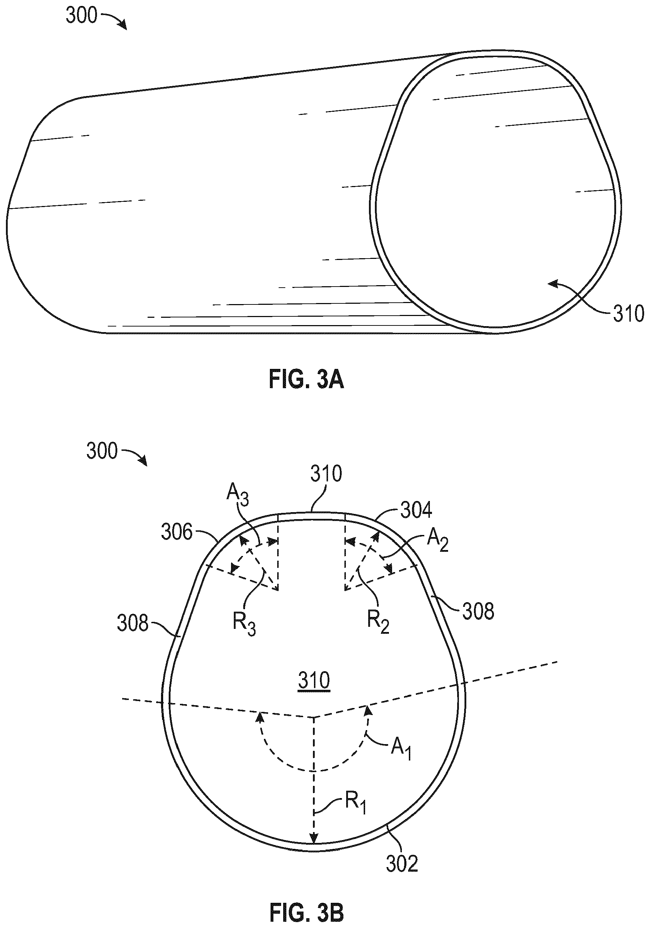

Turning now to FIGS. 3A-3B, schematic illustrations of a pole element 300 in accordance with an embodiment of the present disclosure are shown. FIG. 3A is an isometric illustration of the pole element 300 and FIG. 3B is an end-on view illustrating the shape of the pole element 300. The pole elements of the present disclosure may have non-circular geometries in cross-section. Such non-circular geometries can prevent relative rotation between two pole elements. For example, as shown in FIGS. 3A-3B, the pole element 300 that is illustratively shown, has a three lobe geometry.

As shown, the pole element 300 includes a first lobe 302, a second lobe 304, and a third lobe 306. Each of the lobes 302, 304, 306 is connected by intermediate sections 308 of the pole element 300. Each lobe 302, 304, 306 is defined by a continuous curved structure of the material of the pole element 300 having a substantially constant radius of curvature and such lobes 302, 304, 306 end when a curvature ends or a radius of curvature ends. As shown, the first lobe 302 is defined by a respective first radius of curvature R₁ which extends over a respective first angle A₁. Similarly, the second lobe 304 is defined by a respective second radius of curvature R₂ which extends over a respective second angle A₂ and the third lobe 306 is defined by a respective third radius of curvature R₃ which extends over a respective third angle A₃.

As shown, and noted above, the lobes 302, 304, 306 are connected by the intermediate sections 308, 311. In other configurations, one lobe can directly transition to another lobe based on a change in the radii of curvature between the two adjacent lobes. In the illustrative embodiment, the intermediate sections 308 are non-parallel, substantially straight sections that connect the different lobes 302, 304, 306. In other embodiments, the intermediate sections 308 may be parallel. In still further embodiments, the intermediate sections 308 extend tangentially from the lobes 302, 304, 306. In one such configuration of parallel substantially straight intermediate sections, a two-lobe configuration may be provided with a lobe at each side connected by two parallel substantially straight intermediate sections (e.g., a racetrack geometry). In another configuration having parallel straight intermediate sections, a four-lobe geometry may be provided, having two sets of parallel substantially straight sides, with each set normal to the other (e.g., a rounded corner square or rectangular geometry). The intermediate sections 308 may also be non-straight sections, which may have different curvatures than the lobes of the pole element (e.g., having a much larger radius of curvature). Such curved intermediate section 311 is illustrated between the second lobe 304 and the third lobe 306.

These non-circular geometries prevent relative rotation between pole elements, and thus clamps used to join together such pole elements are not required to provide engagement forces to prevent rotation (e.g., as necessary with circular geometry pole elements). As such, such clamps may only be required to secure translational or axial relative movement between pole elements. This allows for modified clamps that do not apply as much pressure or force upon the pole elements, which can reduce wear to the pole elements.

The pole element 300 includes a hollow interior 310. The hollow interior 310 allows for one or more pole elements to be arranged within the pole element 300 to form an extendable cleaning tool, such as shown and described herein. The hollow interior 310 may also allow for a hose or similar structure to pass therethrough, and thus enable a fluid conduit to be arranged within the hollow interior 310. In some configurations, the hollow interior 310 may be arranged to form a fluid conduit itself. It will be appreciated that the pole element 300 shown in FIGS. 3A-3B may be used with elements and features of other embodiments of the present disclosure, including, without limitation, the extendable cleaning tools of FIGS. 1A-1C.

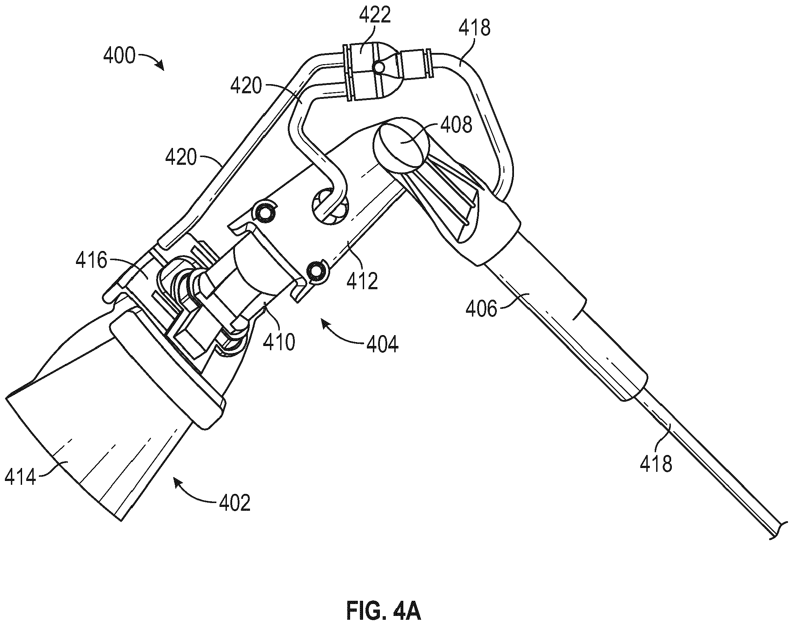

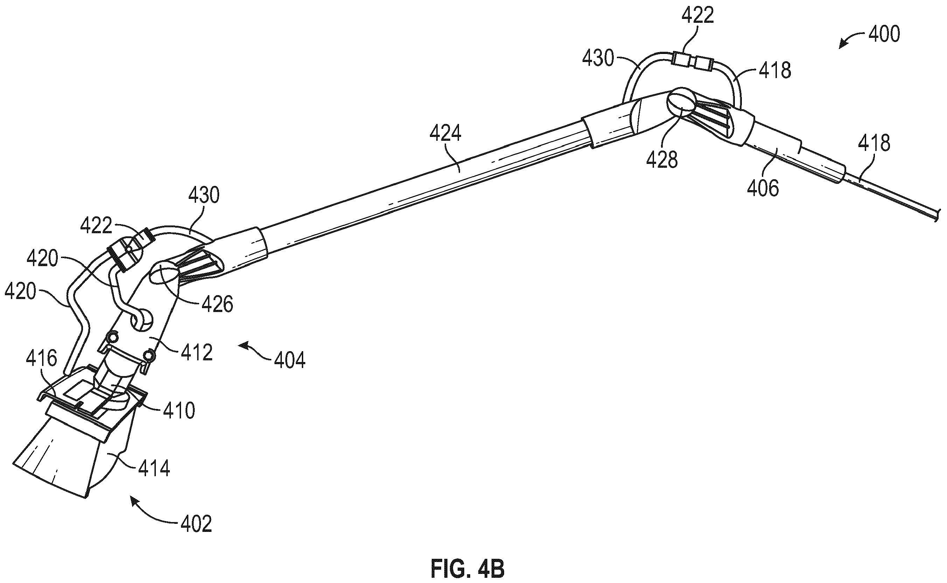

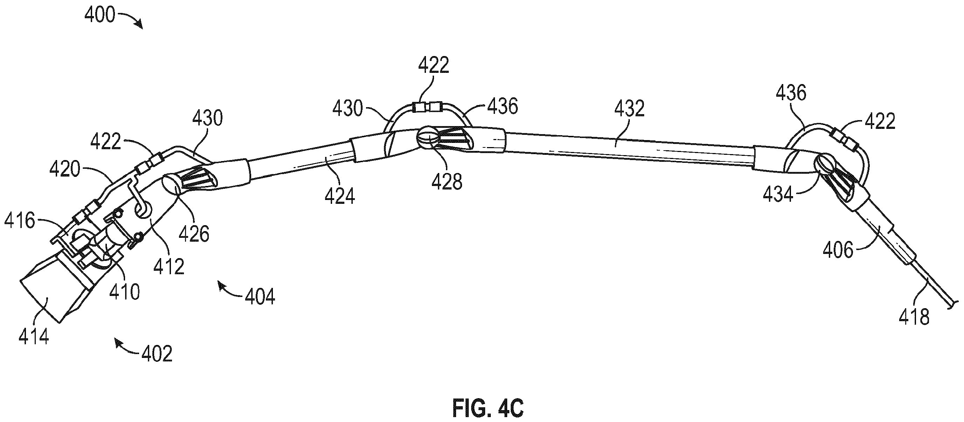

Turning now to FIGS. 4A-4C, schematic illustrations of a working head assembly 400 in accordance with an embodiment of the present disclosure are shown. FIG. 4A illustrates the working head assembly 400 in a first configuration, FIG. 4B illustrates the working head assembly 400 in a second configuration having an extension element, and FIG. 4C illustrates the working head assembly 400 in a third configuration having two extension elements. The working head assembly 400 may be installed at the end of a pole or extendable cleaning tool formed of multiple pole elements, similar to, for example, that shown and described above.

The working head assembly 400 includes a working head 402 that is movably mounted to a head connector 404. In the illustration of FIG. 4A, the head connector 404 is pivotably connected to a pole connector 406 about a pivot 408. The head connector 404 includes a first portion 410 that connects to the working head 402 and a second portion 412 that connects to the pole connector at the pivot 408. The head connector 404 can provide multiple degrees of movement or orientation of the working head 402 relative to the pole connector 406. The working head 402, in this illustrative embodiment, includes a brush 414 and a head mount 416. In alternative embodiments, the brush 414 may be replaced by other cleaning implements, such as squeegees, scrub devices, sponges, or mop heads, as will be appreciated by those of skill in the art. Further, in some embodiments, the working head 402 may include a multi-component configuration, having a brush and scrub combination, a brush and squeegee combination, two different types of brushes, or the like, as will be appreciated by those of skill in the art.

In this illustrative configuration, the working head 402 is water-fed, meaning that water or other fluids (e.g., cleaning fluids) are supplied directly to the working head 402 and dispersed into or adjacent the material or structure of the cleaning implement, such as the brush 414 in this illustrative embodiment. The head mount 416 can provide for connection to one or more hoses or other fluid conduits. For example, as shown, a pole hose 418 is arranged to pass through the pole connector 406 and join to a head hose 420 by means of an optional hose connector 422. The head hose 420 may be a bifurcated or split hose. Each section of the head hose 420 can connect to the head mount 416 to provide a liquid directly into or adjacent the brush 414. As shown, one of the branches or sections of the head hose 420 may pass into and through the head connector 404 to supply a fluid within the bristles of the brush 414. In other embodiments, the head hose may be a single fluid path without any such bifurcation, and supply fluid to one or more specific locations. In some embodiments, the head hose 420 may be connected to a reservoir defined within the working head 402, which in turn can distribute or dispense a fluid (e.g., water and/or cleaning fluids) into and through the brush 414.

As shown in FIG. 4B, the head connector 404 is pivotably connected to a first extension element 424 about a first pivot 426. The first extension element 424 is pivotably connected to the pole connector 406 about a second pivot 428. A first extension hose 430 may be connected to the pole hose 418 proximate the second pivot 428 and the first extension hose 430 may be connected to the head hose 420 proximate the first pivot 426. The first extension hose 430 can connect to the pole hose 418 and the head hose 420 by respective hose connectors 422. The first extension hose 430 may pass within, through, or along the first extension element 424.

As shown in FIG. 4C, the head connector 404 is pivotably connected to the first extension element 424 about the first pivot 426. In this configuration, the first extension element 424 is pivotably connected a second extension element 432 about the second pivot 428. The second extension element 432 is pivotable connected to the pole connector 406 about a third pivot 434. A first extension hose 430 may be connected to the head hose 420 proximate the first pivot 426 and to a second extension hose 436 that passes along, within, or through the second extension element 432, proximate the second pivot 428. The first extension hose 430 can connect to the head hose 420 and the second extension hose 436 by respective hose connectors 422. The second extension hose 436 may be connected to the pole hose 418 proximate the third pivot 434. The second extension hose 436 can connect to the pole hose 418 by a respective hose connector 422. It will be appreciated that the hose connectors 422 may be optional or have different configurations, such as one-to-one hose connection, one-to-two hose connection, two-to-one hose connection, or the like.

The working head assembly 400 provides for a customizable and adjustable working head assembly that may be arranged at the end of a telescoping pole of an extendable cleaning tool. The pivots 426, 428, 434 of the working head assembly 400 can enable various different orientations and arrangements to enable a user to use the working head 402 to clean hard to reach locations and surfaces. Each of the pivots 426, 428, 434 may be optionally lockable such that the orientation of each of the relative components may be fixed in orientation, if desired.

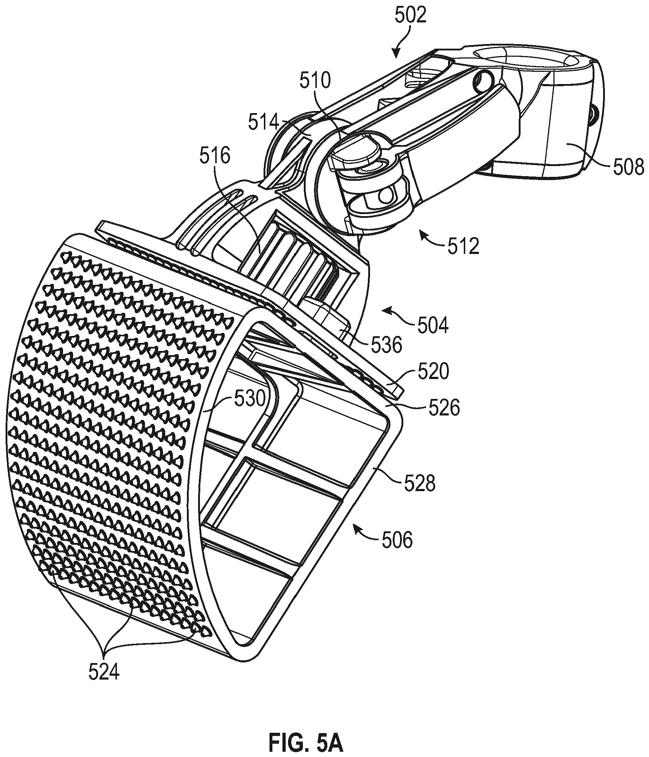

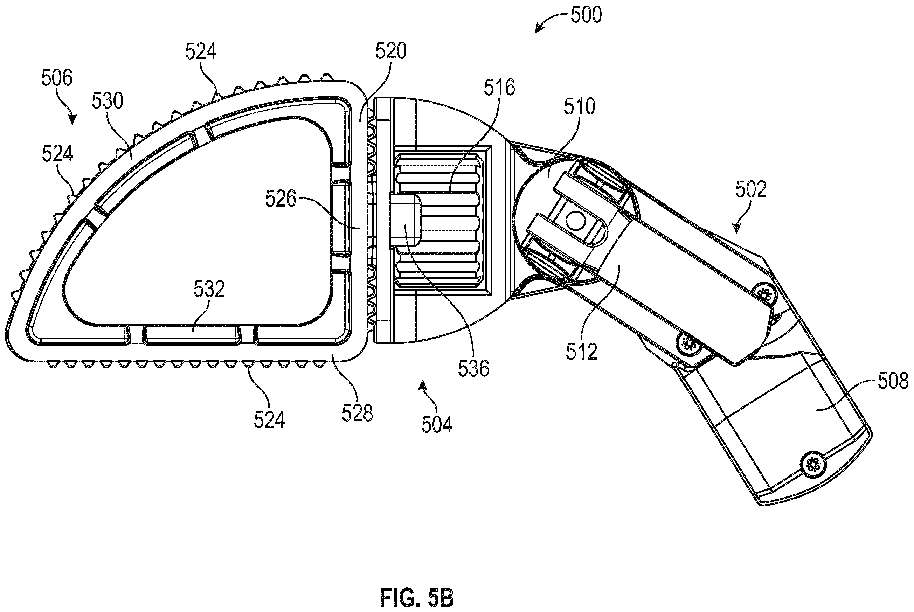

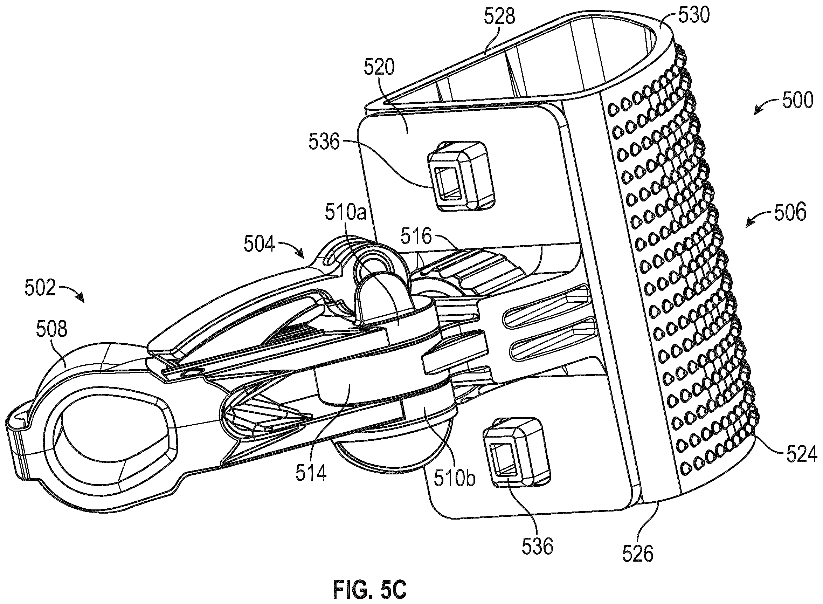

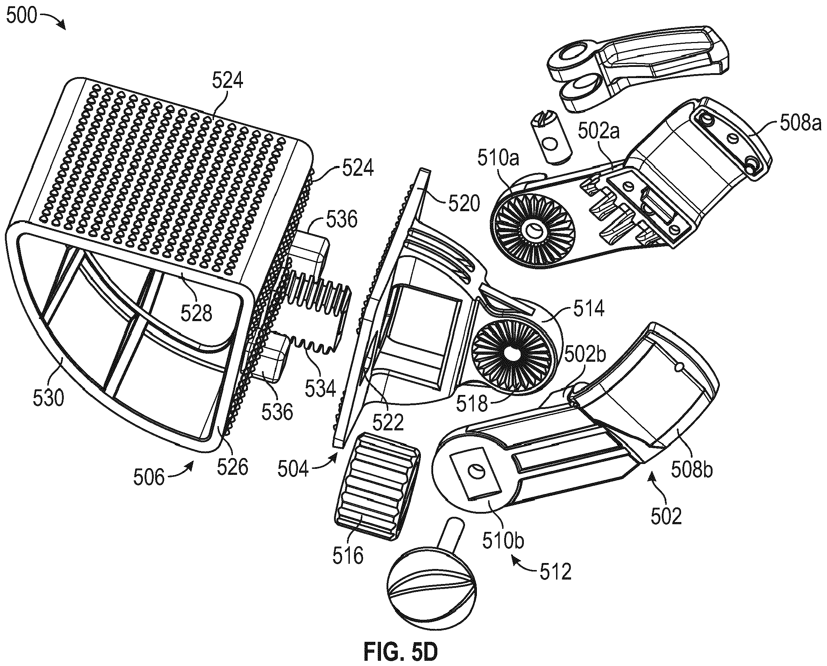

Referring now to FIGS. 5A-5D, schematic illustrations of an accessory attachment 500, for use with cleaning tools, in accordance with an embodiment of the present disclosure are shown. The accessory attachment 500 may be configured to selectively or removably attach to a pole and/or working head assembly, such as those shown and described above. FIG. 5A illustrates a perspective view of the accessory attachment 500, FIG. 5B illustrates a side view of the accessory attachment 500, FIG. 5C is a perspective view of the accessory attachment 500, and FIG. 5D is an unassembled view of elements of the accessory attachment 500.

As shown, the accessory attachment 500 includes an attachment member 502, a mounting member 504, and a holding member 506. The attachment member 502 is configured to releasably connect to a working head assembly and/or a pole element, such as the working head assemblies and/or pole elements shown and described above. The mounting member 504 is configured to releasably attach to the attachment member 502. The holding member 506 is configured to releasably attach to the mounting member 504 and is configured to receive a scrubbing element or other like, as described herein.

The attachment member 502 includes a first connector 508 and a second connector 510. The first connector 508 is configured to securely attach to a cleaning pole structure, such as at the end of a pole element or to be connected to part of a working head assembly. The second connector 510 is configured to releasably connect to the mounting member 504 and secure the mounting member 504 at a desired orientation relative to the attachment member 502. For example, as shown in FIG. 5D, the attachment member 502 may be a two-element structure having a first portion 502a and a second portion 502b that are connectable to each other. The first connector 508 is configured to receive a portion of a pole element or working head assembly between separate portions 508a, 508b. Similarly, the second connector 510 may have a separate portions 510a, 510b that can engage with a portion of the mounting member 504. As shown in FIG. 5D, the second connector 510 can have a toothed arrangement for mating with a similar toothed arrangement on the mounting member 504. The toothed arrangement is provided to enable secure engagement and to permit attachment between the attachment member 502 and the mounting member 504 at different angles of orientation relative to each other. The second connector 510 includes a fastener aperture for receiving a fastener 512 that can be used to loosen or tighten the engagement between the second connector 510 and the mounting member 504. In an embodiment, the fastener 512 is a compression mechanism with a lever having an offset axis of rotation that pulls a threaded rod compressing the attachment member 502 when the lever is moved to a locked position. When in a loose state, the mounting member 504 may be rotatable relative to the attachment member 502. When in a tightened state, the mounting member 504 may be fixedly secured relative to the attachment member 502, and relative rotation may be prevented due to engagement between the toothed arrangement.

The mounting member 504 includes a first connector 514 and a second connector 516. The first connector 514 is configured to be received between the portions 510a, 510b of the second connector 510 of the attachment member 502. The first connector 514 of the mounting member 504 may have a corresponding toothed arrangement for mating with the toothed arrangement of the second connector 510 of the attachment member 502. The first connector 514 of the mounting member 504 may also include a fastener aperture 518. The fastener aperture 518 of the mounting member 504 is configured to align with the fastener aperture(s) of the attachment member 502 such that a fastener 512 may pass through the fastener apertures to securely connect the attachment member 502 and the mounting member 504. The second connector 516 of the mounting member 504 is configured to receive a portion of the holding member 506 to fixedly attached the holding member 506 to the mounting member 504. In this illustrative embodiment, the second connector 516 of the mounting member 504 is configured as a threaded component to receive a threaded element of the holding member 506, as described herein. The mounting member 504 includes a mounting plate 520 with mounting apertures 522 formed in the mounting plate 520.

The holding member 506 is configured to receive and retain a cleaning element or the like. For example, a scrub pad or the like (referred to herein as a "cleaning element") may be affixed to an outer surface of the holding member 506. To ensure the cleaning element is retained on the holding member 506 during user, the holding member 506 includes retention elements 524 on exterior surfaces of the holding member 506. The retention elements 524 may be teeth, protrusions, hooks (e.g., hook and loop), or other type of surface feature or texture that can grip and hold a cleaning element. To provide additional security and retention of the cleaning element on the holding member 506, the cleaning element may be sandwiched between a base 526 of the holding member 506 and the mounting plate 520.

The holding member 506, in this illustrative embodiment, has a semi-circular or D-shape geometry, with the base 526, a flat sidewall 528, and an arcuate or curved sidewall 530. As shown in FIGS. 5A-5D, the curved sidewall 530 extends from an end/edge of the base 526 and curves toward an end/edge of the flat sidewall 528. The flat sidewall 528 extends between the base 526 at one end/edge to an end/edge of the curved sidewall 530. It should be appreciated that while the illustrated embodiment shows the sidewall 530 as being a continuous curve, this is for example purposes and the claims should not be so limited. For example, in other embodiments, the sidewall 530 may be defined by a plurality of curves each having a different radius and/or center location. The geometry of the holding member 506 may be set to provide different curvature or angled portions to the cleaning element attached to the holding member 506. The holding member 506 may be substantially hollow within the base 526 and sidewalls 528, 530, as shown in FIG. 5B. the holding member 506 may also include a rib 532 on an interior surface thereof to provide rigidity and support to the holding member 506.

The holding member 506 attaches to the mounting member 504 at the second connector 516 of the mounting member 504. The holding member 506 includes a post 534 that is receivable within the second connector 516 of the mounting member 504. The post 534 extends from the base 526 of the holding member 506. As shown, the post 534 is threaded for threaded engagement with the second connector 516 of the mounting member 504. In this illustrative embodiment, the holding member 506 also includes one or more protrusions 536 extending from the base 526, in the same direction as the post 534. The protrusions 536 may be received in the mounting apertures 522 formed in the mounting plate 520 of the mounting member 504. The protrusions 536 may fit within the mounting apertures 522 formed in the mounting plate 520 to prevent rotation of the holding member 506 relative to the mounting member 504, particularly during use (e.g., during scrubbing or cleaning using the accessory attachment 500). In some embodiments, the protrusions 536 may be configured to snap-fit and engage with the mounting apertures 522 formed in the mounting plate 520.

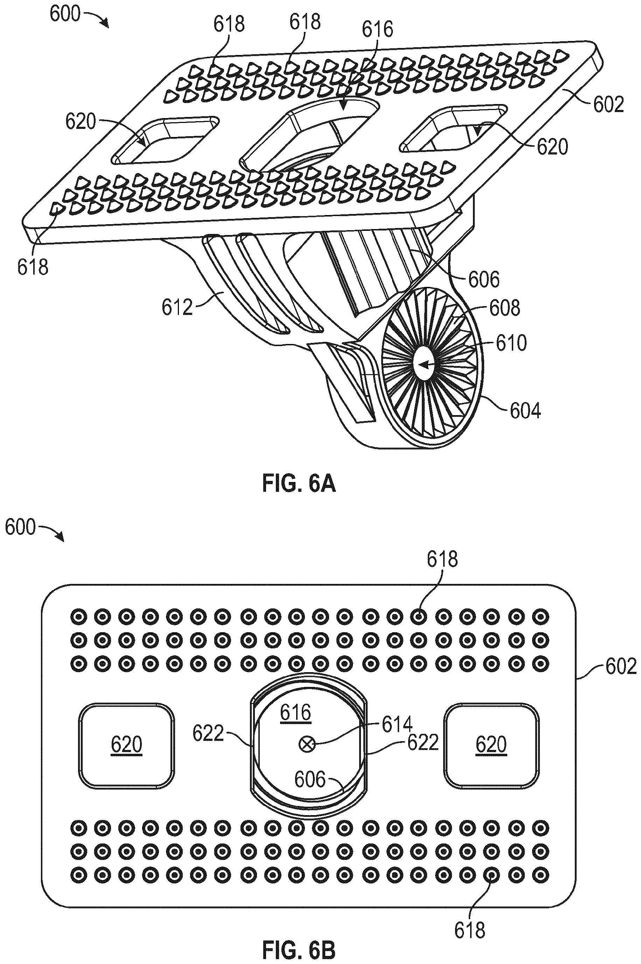

Referring now to FIGS. 6A-6B, schematic illustrations of a mounting member 600 in accordance with an embodiment of the present disclosure are shown. The mounting member 600 may be similar to the mounting member 504 shown and described with respect to FIGS. 5A-5D. FIG. 6A illustrates a perspective view of the mounting member 600 and FIG. 6B is a plan view illustration of a mounting plate 602 of the mounting member 600.

The mounting member 600 includes a first connector 604 and a second connector 606. The first connector 604 is configured to connect to an attachment member (e.g., as shown and described above), directly to a part of a pole element and/or working head assembly, or to some other type of connector or connection mechanism. The second connector 606 is configured to enable attachment between the mounting member 602 and a holding member (e.g., as shown and described above).

As shown, the first connector 604 includes teeth 608 and a fastener aperture 610. The teeth 608 are radially extending elements from the fastener aperture 610 and provide for a set of angled orientations when engaged with respective teeth of an attachment member, such as shown and described above. The teeth 608, when engaged with an attachment member, will inhibit or prevent relative rotation between the two members. The fastener aperture 610 is configured to receive a portion of a fastener through the fastener aperture 610. When the fastener is inserted through a portion of an attachment member and the fastener aperture 610, the fastener can be used to apply a compressive force to engage the teeth 608 with teeth of the respective parts of the attachment member, thereby connecting the two members and preventing relative rotation therebetween.

The second connector 606 is arranged within a body 612 of the mounting member 600. The body 612 may retain the second connector 606 in the mounting member 600 and permit rotation of the second connector 606 about an axis 614 through the second connector 606. The second connector 606 may have a threaded interior for threaded engagement with a post or the like of a holding member (e.g., as shown and described above). The mounting plate 602 includes an opening 616 to permit a post to be inserted into the body 612 of the mounting member 600 and engage with the second connector 606.

The mounting plate 602 includes a plurality of retention elements 618 for gripping or engaging with a portion or surface of a cleaning element that may be installed to the mounting plate 602. The retention elements 618 may be teeth, protrusions, projections, barbed or hooked features, or the like or may be a textured surface (e.g., rough surface texture) that is provided to prevent or reduce the risk of a cleaning element from moving or separating from the mounting plate 602 during use. The mounting plate 602 also includes mounting apertures 620. The mounting apertures 620 are configured to receive protrusions extending from a base of a holding member (e.g., as shown and described above). The mounting apertures 620 can provide snap engagement between the holding member and the mounting member 600. Further, in some configurations, the mounting apertures 620 may be sized and shaped to receive the protrusions and prevent relative rotation between the holding member and the mounting member 600. That is, the mounting apertures 620 may provide stop surfaces or the like to prevent relative rotation of the holding member (when attached) about the axis 614.

The relative rotation may also be inhibited or prevented, in part, due to the geometry of the opening 616 in the mounting plate 602. As shown in FIG. 6B, the opening 616 may have stops 622 that are defined by straight sides of the opening 616. As such, when a post is inserted into the opening 616, the post may not be able to rotate relative to the mounting plate 602. Accordingly, the threading between the second connector 606 and the post is achieved through rotation of the second connector 606 about the axis 614, when the post is inserted into the opening 616. The post may have flat sides to ensure the post can be inserted through the opening 616 (e.g., as shown in FIG. 5D). The stops 622 may also ensure that the installation of the holding member can be in only a limited number of orientations (e.g., two orientations in this example).

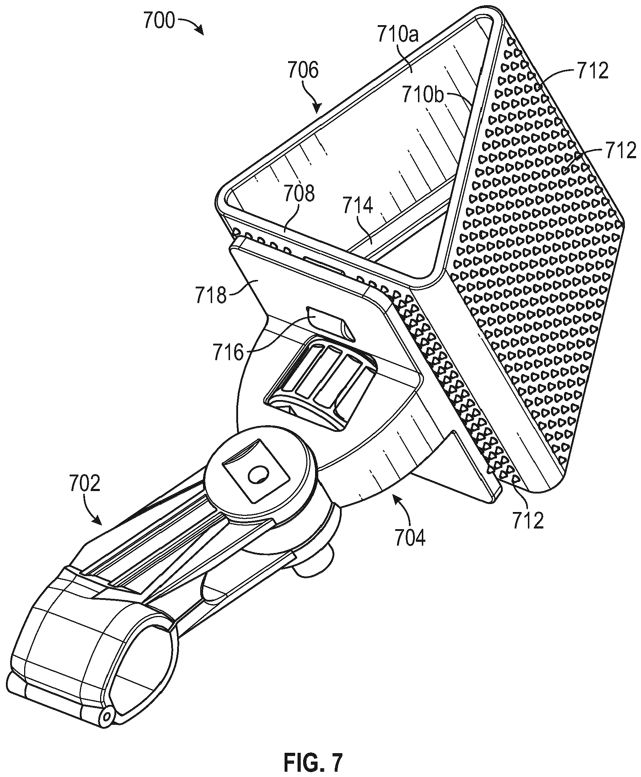

Turning now to FIG. 7, a schematic illustration of an accessory attachment 700 in accordance with an embodiment of the present disclosure is shown. The accessory attachment 700 is similar to that shown and described above, having an attachment member 702, a mounting member 704, and a holding member 706. The attachment member 702 is configured to releasably connect to a working head assembly and/or a pole element, such as the working head assemblies and/or pole elements shown and described above. The mounting member 704 is configured to releasably attach to the attachment member 702. The holding member 706 is configured to releasably attach to the mounting member 704 and is configured to receive a scrubbing element or other like, as described herein.

The attachment member 702 and the mounting member 704 are substantially similar to that shown and described above, and thus repeated description will be omitted. The primary difference between the accessory attachment 700 of FIG. 7 and the above described embodiments is the shape or geometry of the holding member 706. As shown, the holding member 706 has a triangular shape. The holding member 706 has a base 708 and two similar sidewalls 710a, 710b that are angled to form the triangular shape. In this illustrative embodiment, the triangular shape of the holding member 706 is an isosceles triangular shape. It will be appreciated that other triangular shapes may be employed without departing from the scope of the present disclosure, including, without limitation, equilateral triangles, right angle triangles, scalene triangles, or other triangular geometries. Further, although a triangular shape is illustrated, other polygonal shapes having more than three sides may be employed, or even a single wall that extends outward from the base.

As shown in FIG. 7, the holding member 706 includes retention elements 712 on exterior surfaces of the base 708 and the sidewalls 710a, 710b for gripping or retaining a cleaning element. The holding member 706 includes an interior rib 714 to provide structural support to the holding member 706 and, as shown, includes protrusions 716 that fit within mounting apertures formed in a mounting plate 718 of the mounting member 704.

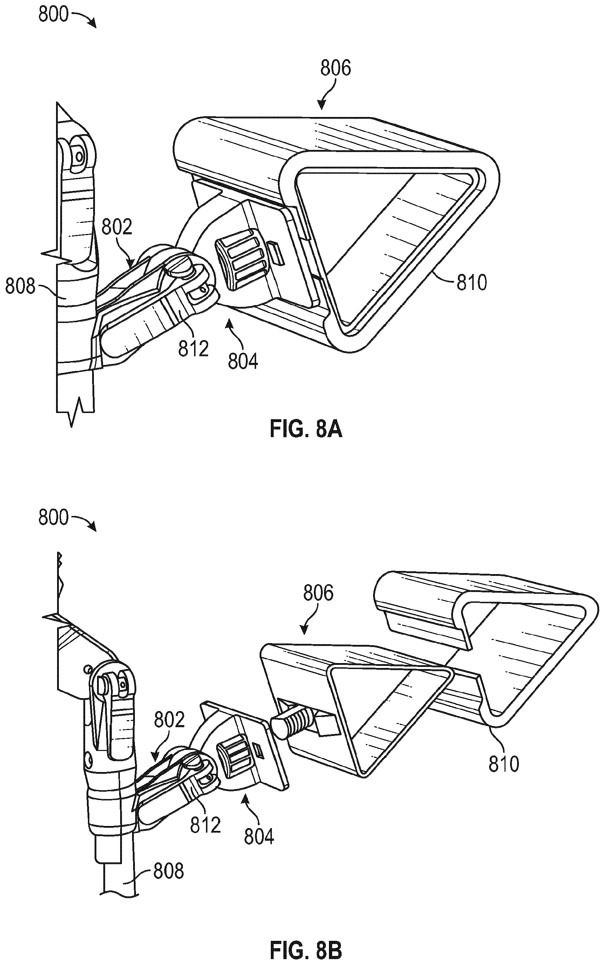

Referring now to FIGS. 8A-8B, schematic illustrations of an accessory attachment 800 in accordance with an embodiment of the present disclosure is shown. The accessory attachment 800 is similar to that shown and described above, having an attachment member 802, a mounting member 804, and a holding member 806. The attachment member 802, as shown in FIGS. 8A-8B, is configured to releasably connect to a working head assembly 808. The mounting member 804 is configured to releasably attach to the attachment member 802. The holding member 806 is configured to releasably attach to the mounting member 804 and is configured to receive a cleaning element 810.

The cleaning element 810 may be a scrub pad or the like that is shaped to fit about an exterior surface of the holding member 806. The holding member 806 may include retention element (as shown and described above) for gripping and securing the attachment of the cleaning element 810 to the holding member 806. Additionally, a portion of the cleaning element 810 is configured to be sandwiched or secured between a base of the mounting member 804 and the holding member 806. This securing may be achieved through threadedly connecting the holding member 806 to the mounting member 804, as shown and described above. As the threaded connection is operated, the holding member 806 will be forced toward the mounting member 804 and a portion of the cleaning element 810 may be captured and secured therebetween.

Also shown in FIGS. 8A-8B is a fastener 812. The fastener 812 is configured to pass through fastener apertures of parts of the attachment member 802 and the mounting member 804 and compress the portions together to secure the mounting member 804 to the attachment member 802 in fixed relation (e.g., relative rotation is prevented, such as by toothed engagement). The fastener 812 may be a quick release fastener/lever, a compression release fastener/lever, or the like. The fastener 812 is configured to apply a compressive force and can be locked or unlocked to enable securing and/or removal of the mounting member 804 from the attachment member 802.

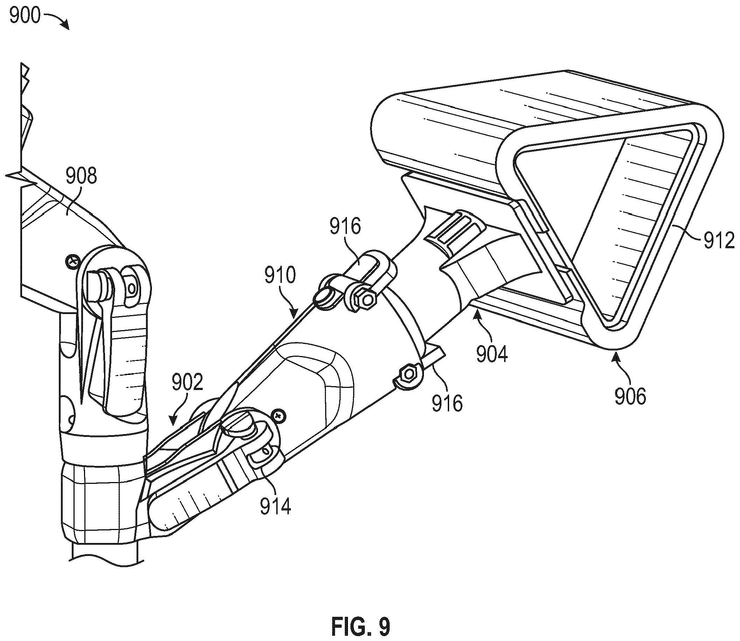

Referring now to FIG. 9, a schematic illustration of an accessory attachment 900 in accordance with an embodiment of the present disclosure is shown. The accessory attachment 900 is similar to that shown and described above, having an attachment member 902, a mounting member 904, and a holding member 906. The attachment member 902, as shown in FIG. 9, is configured to releasably connect to a working head assembly 908. In this embodiment, an intermediate mounting member 910 is provided between the mounting member 904 and the attachment member 902. The attachment member 902, of this embodiment, may be referred to as a quick-connect configuration, when provided in combination with the intermediate mounting member 910. The holding member 906 is configured to releasably attach to the mounting member 904 and is configured to receive a cleaning element 912.

The intermediate mounting member 910 may be provided to increase a distance between the cleaning element 912 and the working head assembly 908. The intermediate mounting member 910 may also provide for a quick connect/release between the mounting member 904/holding member 906 and the attachment member 902. For example, as shown, at a first end of the intermediate mounting member 910 may connect to the attachment member 902 by means of a fastener 914 (e.g., compression release fastener, quick release fastener, or the like), as described above. At a second end of the intermediate mounting member 910, one or more snap connectors 916 may be provided to securely engage with and connect to the mounting member 904. This configuration can allow for quick change of the mounting member 904 and/or the holding member 906. As such, a user may quickly change the type of holding member 906 and/or cleaning element 912. For example, the scrub-type cleaning element 912 shown in FIG. 9 may be replaced by the holding member (and an associated cleaning element) shown in FIGS. 5A-5D or by some other type of cleaning element (e.g., squeegee, mop, scraper, different type of scrub, a brush, or the like). Further, the reverse is also true, with the intermediate mounting member 910, the mounting member 904, and the attachment member 902 shown in FIG. 9 being usable with the configurations and embodiments shown and described above or below.

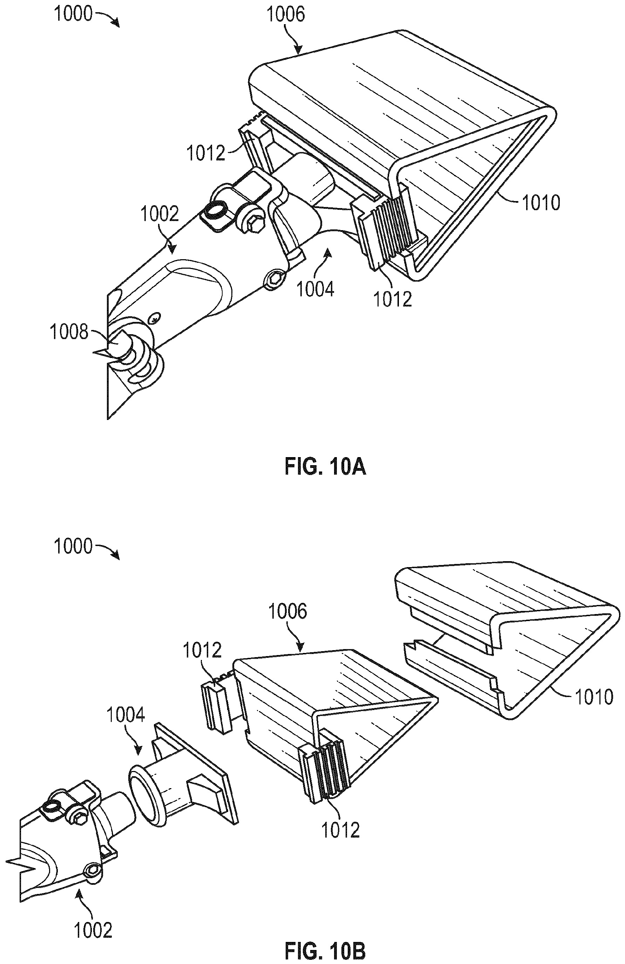

FIGS. 10A-10B illustrate another configuration of an accessory attachment 1000 in accordance with an embodiment of the present disclosure is shown. The accessory attachment 1000 is similar to that shown and described above, having an attachment member (not shown), an intermediate mounting member 1002, a mounting member 1004, and a holding member 1006. The intermediate mounting member 1002, as shown in FIG. 10A, is configured to releasably connect to an attachment member, a working head assembly, or a pole element by means of a fastener 1008. The intermediate mounting member 1002 is configured to receive and support the mounting member 1004. The holding member 1006 is configured to releasably attach to the mounting member 1004 and is configured to receive a cleaning element 1010. In this embodiment, rather than a post, the holding member 1006 includes snap connectors 1012 configured to clip and engage with a base of the mounting member 1004.

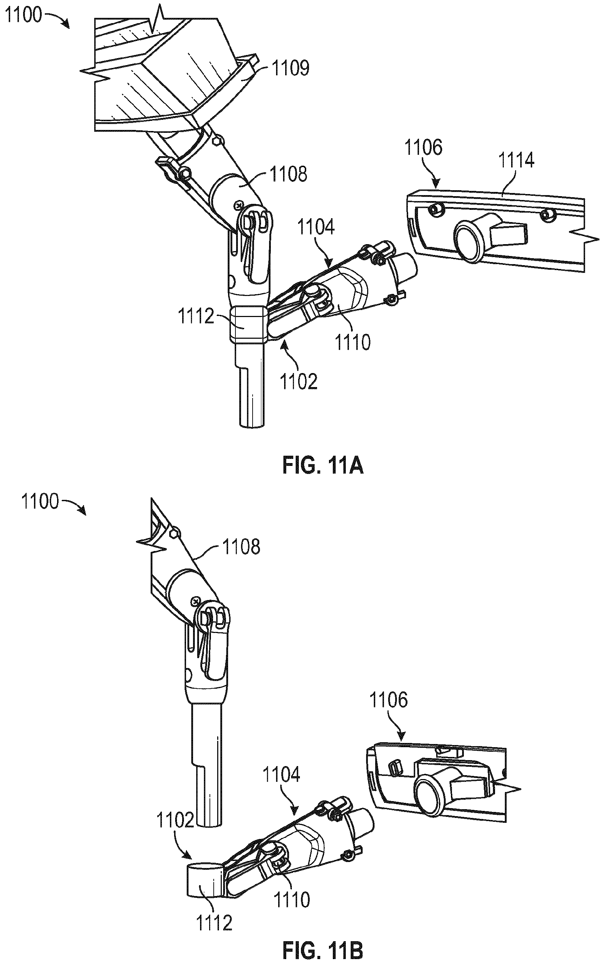

FIGS. 11A-11B illustrate another configuration of an accessory attachment 1100 in accordance with an embodiment of the present disclosure is shown. The accessory attachment 1100 is similar to that shown and described above, having an attachment member 1102, a mounting member 1104, and a holding member 1106. The mounting member 1004, as shown in FIGS. 11A-11B, is configured to releasably connect to the attachment member 1102 and to a working head assembly 1108 by means of a fastener 1110 through the attachment member 1102. The working head assembly 1108 includes a working head 1109, such as a brush, scrub device, mop, squeegee, or the like. In this embodiment, the mounting member 1004 is configured similar to the intermediate mounting member described with respect to FIGS. 9 and 10A-10B. As shown, a first connector 1112 of the attachment member 1102 can fit over and connect to a portion of the working head assembly 1108. The holding member 1106 is configured to releasably attach to the mounting member 1104 and is configured to receive a cleaning element 1114. In this embodiment, rather than a post, the holding member 1106 connects to the mounting member 1104, such as by a snap-fit or snap-connection. Further, in this illustrative embodiment, the cleaning element 1114 is a flat-type scrub, rather than the wrap-around types shown and described above. However, the attachment of the cleaning element 1114 to the holding member 1106 may be substantially similar, using retention elements or the like, fasteners, or other means of retaining and holding the cleaning element 1114 to the holding member 1106.

Advantageously, embodiments described herein provide improved extendable cleaning tools and aspects related thereto. In accordance with some embodiments, advantageously, an accessory attachment may be removably attached to a pole element or a working head assembly to provide additional cleaning functionality. In accordance with some embodiments, a scrub brush type accessory attachment may be provided and attached to the cleaning system. Additionally, in accordance with some embodiments, adjustable and customizable working head assemblies with accessory attachments are provided that enable easy exchange and changing of the accessory cleaning element or replacing such after use or the like.

It will be appreciated that components from the various embodiments described herein may be exchanged or interchanged between embodiments. For example, the quick connect attachment member shown in FIGS. 9A-11B may be used in place of the attachment member shown in the embodiments 5A-8B. Further, the different times of holding members may be interchanged or modified, depending on the specific application and type of cleaning element and/or working head assembly and/or pole element(s) of a given system. Furthermore, the different types and mechanisms of the holding members are not limited to the specific embodiments and arrangements as shown, but rather the features of these components may be interchanged between embodiments and/or used in other similar configurations, without departing from the scope of the present disclosure.

The use of the terms "a," "an," "the," and similar references in the context of description (especially in the context of the following claims) are to be construed to cover both the singular and the plural, unless otherwise indicated herein or specifically contradicted by context. The modifiers "about" and "substantially," used in connection with a quantity, are inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description but is only limited by the scope of the appended claims.

## Claims

1. A cleaning tool accessory attachment comprising:
an attachment member configured to releasably attached to a portion of a water-fed cleaning assembly;
a mounting member releasably connected to the attachment member; and
a holding member releasably connected to the mounting member, the holding member configured to releasably retain a cleaning element thereon.

2. The cleaning tool accessory attachment of claim 1, wherein the portion of the water-fed cleaning assembly is one of a working head assembly and a pole element of an extendable pole.

3. The cleaning tool accessory attachment of claim 1, further comprising a cleaning element releasably attached to the holding member.

4. The cleaning tool accessory attachment of claim 3, wherein the cleaning element is a scrub pad.

5. The cleaning tool accessory attachment of claim 3, wherein a portion of the cleaning element is secured between a portion of the mounting member and a portion of the holding member.

6. The cleaning tool accessory attachment of claim 1, wherein the holding member has a D-shape geometry.

7. The cleaning tool accessory attachment of claim 1, wherein the holding member has a triangular-shape geometry.

8. The cleaning tool accessory attachment of claim 1, wherein the holding member comprises at least one retention element on an exterior surface, the at least one retention element configured to engage and secure the cleaning element to the holding member.

9. The cleaning tool accessory attachment of claim 1, further comprising a fastener releasably connecting the attachment member to the mounting member.

10. The cleaning tool accessory attachment of claim 9, wherein the fastener is one of a quick release fastener or a compression release fastener.

11. The cleaning tool accessory attachment of claim 1,
wherein the mounting member comprises a mounting plate having at least one mounting aperture, and
wherein the holding member comprises at least one protrusion on a base of the holding member, the at least one protrusion configured to be received in the at least one mounting aperture.

12. The cleaning tool accessory attachment of claim 1, wherein the mounting member comprises a first connector configured to releasably connect with the attachment member and a second connector configured to releasably connect with the holding member.

13. The cleaning tool accessory attachment of claim 12, wherein the holding member comprises a threaded post on a base of the holding member, wherein the threaded post is configured to be received by and threadedly engage with the second connector of the mounting member.

14. The cleaning tool accessory attachment of claim 12, wherein:
the first connector of the mounting member is configured to be received between two portions of the attachment member and secured thereto by a compressive force; and
the first connector of the mounting member comprises a plurality of first teeth and each of the two portions of the attachment member comprises a plurality of second teeth, and when the first connector is received and compressed between the two portions, relative rotation between the mounting member and the attachment member is prevented.

15. The cleaning tool accessory attachment of claim 1, wherein the holding member comprises a hollow interior with a rib along an interior surface of the holding member, the rib configured to provide structural support to the holding member.
